# EUROPÄISCHE PATENTANMELDUNG

(11) **EP 1 128 396 A1**
(43) Veröffentlichungstag der Anmeldung: **29.08.2001**
(21) Anmeldenummer: 00400534.4
(22) Anmeldetag: 28.02.2000
(51) Int. Cl.: H01B 7/288

(54) **Elektrisches Kabel**

(71) Anmelder: Nexans, 75008 Paris (FR)
(72) Erfinder: Madry, Peter Dipl.-Ing, 30890 Barsinghausen (DE); Jacob, Jürgen Dipl.-Ing., 31655 Stadthagen (DE)
(74) Vertreter: Döring, Roger, Dipl.-Ing.

(57) **Zusammenfassung**

Bei einem elektrischen Kabel mit zumindest einem isolierten Leiter, mindestens einem Schirm aus einem Geflecht oder Gewebe sowie einem Mantel, besteht das Geflecht oder Gewebe (8,13) aus metallischen Drähten und Garnen oder Fäden aus bei Feuchtigkeitszutritt quellfähigem Material.

## Beschreibung

Die Erfindung betrifft ein elektrisches Kabel nach dem Oberbegriff des Anspruchs 1.

Schirme bzw. Abschirmungen sind in der Kabeltechnik seit langem bekannt. Sie dienen zur Verbesserung der Dauerbiegefestigkeit aber auch zur Abschirmung, um zu verhindern, daß Funkstörungen und elektrische Beeinflussungen von elektronischen Anlagen vermindert werden. Derartige Schirme bestehen im allgemeinen aus einer Metalldrahtumflechtung. Sie dienen darüber hinaus als mechanischer Schutz, im Fehlerfall zur Ableitung von Fehlerströmen und als Berührungsschutz.

Weiterhin sind elektrische Leitungen bekannt, bei denen die isolierten Leiter (Adern) mit einem metallischen Geflecht versehen sind, um die Umweltverträglichkeit solcher Leitungen zu verbessern. Bei Hoch- und Mittelspannungskabeln erfüllen elektrische Schirmungen folgende Funktionen:
Potentialsteuerung und Begrenzung des elektrischen Feldes
Fortleitung von Kurzschluß-, Ableit- und Ladeströmen
elektrischer Berührungsschutz.

Solche Schirmungen können aus leitfähigen Kunststoffschichten bestehen z. B. im Falle der inneren und äußeren Leitschicht oder aus metallischen Bändern, Drähten oder Geflechten bzw. Geweben, die über der äußeren Leitschicht angeordnet sind.

Um zu verhindern, daß sich eingedrungenes Wasser in Längsrichtung des metallischen Schirmbereiches ausbreiten kann, ist es bekannt, den Schirmbereich abzudichten z. B. durch bei Feuchtigkeitszutritt quellfähiges Pulver oder quellfähige Bänder. Bei Feuchtigkeitseinbrüchen quellen diese Materialien auf und füllen die vorhandenen Hohlräume und Spalten im Schirmbereich aus. Auf diese Weise ist verhindert, daß sich eingedrungenes Wasser über weite Bereiche in Längsrichtung des Kabelschirmes ausbreiten kann.

Bei einer bekannten Lösung erfolgt die Spaltabdichtung zwischen den Schirmdrähten und der äußeren Leitschicht mit einer Polsterschicht aus leitfähigem Quellvlies oder einer Kombination aus leitfähigem Kreppapier mit nichtleitendem Quellvlies.

Die Verwendung von Pulver aus quellfähigem Material hat sich als nachteilig erwiesen, weil das Pulver wegen seines geringen spezifischen Gewichtes staubt und von daher störend für das Bedienungspersonal während der Fertigung aber auch bei der Kabelmontage ist.

Die Handhabung von Vliesen und Kreppapier kann wegen deren geringen Reißfestigkeit Probleme in der Fertigung bereiten.

Darüber hinaus wird der Durchmesser des Kabels durch das Vlies und Kreppapier vergrößert

Der Erfindung liegt von daher die Aufgabe zugrunde, eine längswasserdichte Schirmung für ein elektrisches Kabel bereitzustellen, welches leicht handhabbar ist, einen guten Abschirmeffekt aufweist und eine sichere Längsabdichtung gewährleistet.

Diese Aufgabe wird durch das im Kennzeichen des Anspruchs 1 Erfaßte gelöst.

Weitere vorteilhafte Ausgestaltungen der Erfindung sind in den Unteransprüchen beschrieben.

Neben den sich aus der Aufgabenstellung direkt ergebenden Vorteilen weist das Kabel nach der Lehre der Erfindung noch den Vorteil auf, daß das Gewebe oder Geflecht bei einem Hoch-oder Mittelspannungskabel die Schirmdrähte und/oder die sogenannte Querleitwendel ersetzen kann. Das Gewebe dient dann sowohl als Kontaktelement zwischen den einzelnen Abschirmdrähten untereinander als auch zur Kontaktierung der äußeren Leitschicht mit einem ggfs vorzusehenden metallischen Außenmantel.

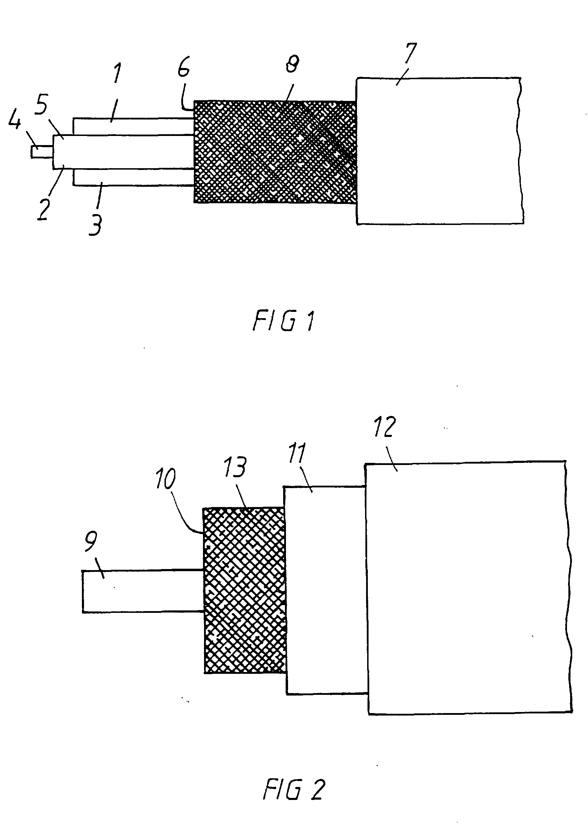

Die Erfindung ist anhand der in den Figuren 1 und 2 schematisch dargestellten Ausführungsbeispiele näher erläutert.

Fig. 1 zeigt eine flexible Leitung, bestehend aus mehreren Adern 1, 2 und 3, die jeweils aus einem elektrischen Leiter 4 und einer den elektrischen Leiter 4 umhüllenden Isolierschicht 5 aus thermoplastischen Kunststoff besteht. Die Adern 1, 2 und 3 sind von einem Innenmantel 6 umgeben, auf den ein Außenmantel 7 aus Kunststoff aufextrudiert ist. Zwischen dem Innenmantel 6 und dem Außenmantel 7 ist ein Geflecht oder Gewebe 8 angeordnet, welches aus vielen metallischen Drähten und einigen wenigen Fäden oder Garnen (gestrichelt dargestellt) aus bei Feuchtigkeitszutritt quellbarem Material besteht.

Das Gewebe bzw. Geflecht 8 dient einmal als mechanischer Schutz zum anderen als elektromagnetische Abschirmung.

Bei dieser Leitung kann das Gewebe oder Geflecht 8 auch in nicht dargestellter Weise auf jeder der Adern 1, 2 und 3 angeordnet sein.

In der Figur 2 ist ein Hochspannungskabel dargestellt, welches aus einem metallischen Leiter 9, einer hochspannungsfesten Isolierung z. B. aus Polyethylen, einem Innenmantel 11 sowie einem Außenmantel 12 besteht.

Die auf dem elektrischen Leiter 9 befindliche innere Leitschicht sowie die auf der Isolierschicht 10 befindliche äußere Leitschicht sind nicht gesondert bezeichnet. Auf der äußeren Leitschicht befindet sich ein Gewebe oder Geflecht 13, welches ebenfalls aus vielen metallischen Drähten und einigen wenigen Fäden oder Garnen (gestrichelt dargestellt) aus bei Feuchtigkeitszutritt quellbarem Material besteht.

Anstelle des Innenmantels 11 kann auch ein einseitig mit Copolymer beschichtetes Aluminiumband vorgesehen sein, wenn eine Querdichtigkeit des Mantelaufbaus gegen eindiffundierende Feuchtigkeit gefordert wird. Bei solchen Kabeln ist üblicherweise eine aus vielen Drähten bestehende Schirmlage vorhanden. Das Gewebe oder Geflecht 11 ist dann zwischen der Schirmlage und dem Aluminiumband angeordnet, wobei das Gewebe oder Geflecht 11 zum einen Träger für die Mittel zum Abdichten im Falle eines Feuchtigkeitseinbruchs ist, zum anderen für eine gute Kontaktierung zwischen den Drähten der Schirmlage untereinander und den Drähten der Schirmlage und dem Aluminiumband sorgt.

Das Gewebe oder Geflecht 8 bzw. 13 liegt in Form eines Bandes vor und wird auf das jeweilige Aufbauelement durch Wickeln aufgebracht.

Das Gewebe oder Geflecht wird dadurch hergestellt, daß an Stelle einiger Metalldrähte jeweils ein Faden oder ein Garn aus dem quellbaren Material eingesetzt wird oder daß nachträglich in die Zwischenräume zwischen den Metalldrähten in vorbestimmten Abständen die Fäden oder Garne eingeflochten werden. Es besteht jedoch auch die Möglichkeit, das Geflecht mit einem Flechter aufzubringen, wobei einige der Drähte in beiden Flechtrichtungen durch Fäden oder Garne aus dem bei Feuchtigkeitszutritt quellenden Material ersetzt sind.

Das Gewebe oder Geflecht kann nach einer weiteren Ausgestaltung der Erfindung aus Elementen bestehen, die einen Metalldraht und einen Faden oder Garn aus quellfähigem Material aufweisen. Der Metalldraht und der Faden oder das Garn können miteinander verseilt oder vertwistet sein oder beide können parallel zueinander verlaufen. Die Anzahl der Metalldrähte im Gewebe oder Geflecht sollte jedoch die Anzahl der aus Metalldraht und Faden oder Garn bestehenden Element um ein Vielfaches überschreiten.

## Patentansprüche

1. Elektrisches Kabel mit zumindest einem isolierten Leiter, mindestens einem Schirm aus einem Geflecht oder Gewebe sowie einem Mantel, **dadurch gekennzeichnet,** daß das Geflecht oder Gewebe (8,13) aus metallischen Drähten und Garnen oder Fäden aus bei Feuchtigkeitszutritt quellfähigem Material besteht.

2. Elektrisches Kabel nach Anspruch 1, **dadurch gekennzeichnet,** daß bei einem metallischen Gewebe oder Geflecht (8,13) zumindest in einigen der Zwischenräume zwischen den Metalldrähten Garne oder Fäden aus bei Feuchtigkeitszutritt quellfähigem Material eingefügt sind.

3. Elektrisches Kabel nach Anspruch 1 oder 2, **dadurch gekennzeichnet,** daß das Geflecht oder Gewebe (8,13) Elemente aufweist, die aus metallischen Drähten und Garnen oder Fäden aus bei Feuchtigkeitszutritt quellfähigen Material bestehen.

4. Elektrisches Kabel nach einem der Ansprüche 1 bis 3, **dadurch gekennzeichnet,** daß das Gewebe oder Geflecht (8,13) auf jeder Ader und/oder einem Innenmantel (6), der die Adern oder Leiter des Kabels einschließt, angeordnet ist.

5. Elektrisches Kabel nach einem der Ansprüche 1 bis 4, **dadurch gekennzeichnet,** daß das Gewebe oder Geflecht (8,13) als bandförmiges Gebilde auf die Ader und/oder den Innenmantel (6) wendelförmig aufgewickelt ist.

6. Elektrisches Kabel nach einem der Ansprüche 1 bis 5, **dadurch gekennzeichnet,** daß die Anzahl der Metalldrähte um mindestens den Faktor drei größer vorzugsweise größer sieben ist als die Anzahl der Fäden oder Garne.
